# EUROPEAN PATENT SPECIFICATION

(11) **EP 4 110 850 B1**
(45) Date of publication and mention of the grant of the patent: **11.11.2026**
(21) Application number: 21706277.7
(22) Date of filing: 22.02.2021
(51) Int. Cl.: C08G 65/00, C08F 2/48, C08F 14/26, C08F 214/26, C10M 107/38, C10N 20/04, C10N 50/10

(54) **(PER)FLUOROPOLYETHER POLYMERS**
(PER)FLUORPOLYETHERPOLYMERE
POLYMÈRES DE (PER)FLUOROPOLYÉTHER

(30) Priority: 24.02.2020 EP 20159010
(43) Date of publication of application: 04.01.2023
(73) Proprietor: Syensqo Specialty Polymers Italy S.p.A., 20021 Bollate (MI) (IT)
(72) Inventor: BEA, Michela, 21040 Carnago (VA) (IT); DE PATTO, Ugo, 20815 Cogliate (IT)
(74) Representative: Benvenuti, Federica
(86) International application number: PCT/EP2021/054271
(87) International publication number: WO 2021/170520

(56) References cited:
- WO-A1-2016/150941
- US-B2- 8 258 090

## Description

### Cross-reference to related patent applications

This application claims priority filed on 24 February 2020 in Europe with Nr. 20159010.6.

### Technical Field

The present invention relates to new polymers obtained by the copolymerization of (per)fluoropolyether (PFPE), tetrafluoroethylene (TFE) and at least one non-homopolymerizable olefin.

### Background Art

It is known in the art that polymerizing perfluorinated olefins in the presence of a perfluorinated polyperoxides allows to synthetize polymers in the form of greases.

For example, US 3,493,530 (Montecatini Edison S.p.A.) discloses a process for polymerizing halogenated olefins with a macromolecular perfluorinated polyperoxide, such that polymeric mixtures are formed during the reaction, in very wide ratios, depending on the initial amount of monomers and polyperoxide. Such reaction allows obtaining homogeneous greases that can be used as lubricants. According to this document, the polymerization can be performed under heating, or at room temperature in the presence of UV radiation.

US 4,500,739 (Montedison S.p.A.) discloses perfluoropolyether comprising, besides -CF₂- and -C₂F₄- recurring units, also a third fluoroalkylene unit containing three or more carbon atoms, said unit being connected to each other through -O-ether bridges, and process for obtaining said polyether, consisting in reacting a mixture of polyperoxidic perfluoropolyether and a fluorinated olefin, in the presence of U.V. radiations.

More recently, US 8,258,090 (Solvay Solexis S.p.A.) disclosed fluorinated lubricants of formula (I) :

T-O-[A-B]_{z}-[A-B']_{z'}-A-T' (I)

wherein A represents a perfluoropolyether chain and B represents a block formed of units deriving from one or more olefins, wherein at least one of them is polymerizable by radical route. This patent provides a very long list of suitable olefins, and the synthesis via thermal process is the preferred synthetic route.

WO 2016/150941 (Solvay Specialty Polymers Italy S.p.A.) discloses highly viscous fluids suitable for use as damping fluids. In other words, these polymers are highly viscous fluids, which can be provided within damper devices to absorb and damp shock impulses. Among the others, Example 10 of this patent application discloses the synthesis of a polymer containing segments from PFPE, TFE and perfluoromethyl vinyl ether (PMVE) via photochemical route, such that the polymer thus obtained comprises 19.2 wt.% of blocks of formula -(BO)_{q}- (the wt.% being based on the total weight of the polymer) wherein B comes from TFE (10.8% w/w) and PMVE (8.4% w/w). Despite such polymer is highly viscous, it is provided in the form of oil.

WO 2018/185026 (Solvay Specialty Polymers Italy S.p.A.) discloses a liquid composition comprising physical mixture of a least one (per)fluoropolyether polymer and at least one amorphous polymer.

### Summary of invention

The Applicant surprisingly found that PFPE-based polymers can be provided in the form of rubber-like polymers, by reacting a perfluoropolyether (PFPE) peroxide polymer with tetrafluoroethylene (TFE) and at least one specific non homo-polymerizable olefin, in the presence of U.V. light.

Advantageously, said PFPE-based polymers can be used as lubricants without the need of adding viscosity modifiers, such as for example the solid particles described in WO 2016/150941 cited above.

Advantageously, the above-mentioned photochemical method allows to synthetize PFPE-based rubber-like polymers, characterized by a narrow dispersion of molecular weights.

Thus, in a first aspect, the present invention relates to a polymer [polymer (P)] complying with the following chemical formula (I):

T-O-[A-B]_{z}-[A-B']_{z'}-A-T' (I)

wherein
A is -(X)ₐ-O-(R_{f})-(X')_{b}- in which
   (R_{f}) is a fully or partially fluorinated polyoxyalkylene chain,
   X and X', equal to or different from each other, are selected from -CF₂-, -CF₂CF₂- and -CF(CF₃)-;
   a and b, equal to or different from each other, are integers equal to 0 or 1
with the proviso that the block A linked to the end group T-O- has a = 1 and the block A linked to the end group T' has b = 0;
z is an integer higher than or equal to 2;
z' is 0 or an integer higher than or equal to 1;
T and T', equal to or different from each other, are hydrogen atom or a group selected from -CF₂H, -CF₂CF₂H, -CF₃, -CF₂CF₃, -CF₂CF₂CF₃, - CF₂Cl, -CF₂CF₂Cl, -C₃F₆Cl, -CF₂Br; and
each of B and B', identical or different from each other, is a recurring unit of formula

   -[(CF₂CF₂)_{c}-(CF₂CFR^{X})_{d}]ₑ-
wherein R^{X} is independently selected from:
   -CF₃, -OCF₃, -OC₂F₅, and -OC₃F₇ and mixtures thereof; -OCF₂OR_{f2},
   wherein R_{f2} is a linear or branched C₁-C₆ perfluoroalkyl group, cyclic C₅-C₆ perfluoroalkyl group, a linear or branched C₂-C₆ perfluoroxyalkyl group;
   preferably, R_{f2} is -CF₂CF₃, -CF₂CF₂OCF₃, or -CF₃,
   c, d and e are independently an integer from 1 to 500;
   characterized in that :
      (1) -(CF₂CF₂)_{c}- and -(CF₂CFR^{X})_{d}- are statistically distributed within B and B'; and
      (2) recurring units of formula -(CF₂CF₂)_{c}- amount to 15 to 28 wt.% of the weight of said polymer (P), based on 100 wt.% of said polymer (P).

The Applicant surprisingly found that when the recurring units of formula -(CF₂CF₂)_{c}- amount to at least 11 wt.% of the weight of said polymer (P), based on 100 wt.% of weight of polymer (P), the polymer is no longer in the form of an oil (i.e., a viscous liquid) but is rather in the form of a rubber-like polymer, which allows to broaden its application for industrial applications.

### Detailed description of the invention

For the purpose of the present description and of the following claims:
- the use of parentheses around symbols or numbers identifying the formulae, for example in expressions like "polymer (P)", etc., has the mere purpose of better distinguishing the symbol or number from the rest of the text and, hence, said parenthesis can also be omitted;
- the acronym "PFPE" stands for "(per)fluoropolyether" and, when used as substantive, is intended to mean either the singular or the plural from, depending on the context;
- the prefix "(per)" in the term "(per)fluoropolyether" means that the polyether can be fully or partially fluorinated;
- the term "olefin" is intended to mean an unsaturated hydrocarbon containing at least one carbon-carbon double bond.

Preferably, the number average molecular weight of said polymer (P) ranges from 5000 to 150000 g/mol, more preferably from 10000 to 100000 g/mol, as determined by ¹⁹F-NMR spectroscopy.

Said polymer (P) comprises recurring units of formula -(CF₂CF₂)_{c}- in an amount from 15 to 28 wt.%, based on 100 wt.% of said polymer (P).

Preferably, said polymer (P) comprises recurring units of formula -(CF₂CFR^{X})_{d}- in an amount from 4 to 20 wt.%, more preferably from 6 to 18 wt.%, based on 100 wt.% of said polymer (P).

Said polymer (P) is characterized by comprising :
(2a) recurring units of formula -(CF₂CF₂)_{c}- in an amount of 15 to 28 wt.% and recurring units of formula -(CF₂CFR^{X})_{d}- in an amount from 4 to 20 wt.%, based on 100 wt.% of said polymer (P), or
(2b) recurring units of formula -(CF₂CF₂)_{c}- in an amount from 15 to 28 wt.% and in the recurring unit of formula -(CF₂CFR^{X})_{d}-, R^{X} is -CF₃ .

Preferably, according to one embodiment, polymer (P) comprises in the recurring units of formula -(CF₂CFR^{X})_{d}- , R^{X} is independently selected from: -OCF₃, -OC₂F₅, and -OC₃F₇ and mixtures thereof; - OCF₂OR_{f2}, wherein R_{f2} is a linear or branched C₁-C₆ perfluoroalkyl group, cyclic C₅-C₆ perfluoroalkyl group, a linear or branched C₂-C₆ perfluoroxyalkyl group; and d is an integer from 1 to 500.

Preferably, according to this embodiment, polymer (P) comprises recurring units of formula -(CF₂CFR^{X})_{d}- in an amount of from 6 to 18 wt.%, based on 100 wt.% of said polymer (P).

Preferably, according to another embodiment, polymer (P) comprises
- recurring units of formula -(CF₂CF₂)_{c}- in an amount from 15 to 28 wt.% and
- in the recurring unit of formula -(CF₂CFR^{X})_{d}-, R^{X} is -CF₃ and d is an integer from 1 to 500.

Preferably, said chain (R_{f}) comprises, preferably consists of, repeating units R°, said repeating units being independently selected from the group consisting of:
(i) -CFXO-, wherein X is F or CF₃;
(ii) -CFXCFXO-, wherein X, equal or different at each occurrence, is F or CF₃, with the proviso that at least one of X is -F;
(iii) -CF₂CF₂CW₂O-, wherein each of W, equal or different from each other, are F, Cl, H;
(iv) -CF₂CF₂CF₂CF₂O-;
(v) -(CF₂)_{w}-CFZ-O- wherein w is an integer from 0 to 3 and Z is a group of general formula -O-R_{(f-a)}-Y, wherein R_{(f-a)} is a fluoropolyoxyalkene chain comprising a number of repeating units from 0 to 10, said recurring units being chosen among the followings : -CFXO- , -CF₂CFXO-, -CF₂CF₂CF₂O-, -CF₂CF₂CF₂CF₂O-, with each of each of X being independently F or CF₃ and Y being a C₁-C₃ perfluoroalkyl group.

Preferably, chain (R_{f}) complies with the following formulae (R_{f}-I) and (R_{f}-II): (R_{f}-I)

-[(CFX¹O)_{g1}(CFX²CFX³O)_{g2}(CF₂CF₂CF₂O)_{g3}(CF₂CF₂CF₂CF₂O)_{g4}]-

wherein
- X¹ is independently selected from -F and -CF₃,
- X², X³, equal or different from each other and at each occurrence, are independently -F, -CF₃, with the proviso that at least one of X is -F;
- g1, g2, g3, and g4, equal or different from each other, are independently ≥0, such that g1+g2+g3+g4 is in the range from 2 to 300, preferably from 10 to 250, even more preferably from 15 to 200; should at least two of g1, g2, g3 and g4 be different from zero, the different recurring units are generally statistically distributed along the chain;

   (R_{f}-II) -[(CFX¹O)_{g1}(CFX²CFX³O)_{g2}(CF₂CF₂CF₂O)_{g3}(CF₂CF₂CF₂CF₂O)_{g4}- (CF(CF₃)O)_{g5}(CF₂CF(CF₃)O)_{g6}]-

   wherein
- X¹, X², X³ are as defined above;
- g1, g2, g3, g4, g5 and g6, equal or different from each other, are independently ≥0, such that g1+g2+g3+g4+g5+g6 is in the range from 2 to 300, preferably from 10 to 250, with the proviso that at least one of g5 and g6 are different from 0.

In a preferred embodiment, chain (R_{f}) complies with formula (R_{f}-I) above.

Preferably, X and X', equal to or different from each other, are selected from -CF₂- and -CF₂CF₂-.

Preferably, T and T', equal to or different from each other, are hydrogen atom or a group selected from -CF₃, -CF₂CF₃, -CF₂CF₂CF₃, -CF₂Cl, - CF₂CF₂Cl.

Preferably, said polymer (P) is manufactured by contacting at least one peroxidic perfluoropolyether polymer, at least tetrafluoroethylene and at least one second co-monomer, in the presence of UV radiation.

Alternatively, said polymer (P) is manufactured by contacting at least one peroxidic perfluoropolyether polymer, at least tetrafluoroethylene and at least one second co-monomer, under heating.

Said peroxidic perfluoropolyether polymer is prepared according to methods known in the art, e.g. as disclosed in US 8,258,090 (Solvay Solexis S.p.A.)**.**

According to a preferred embodiment, said at least one second co-monomer is selected in the group consisting of : hexafluoropropene (HFP), perfluoro-methyl vinyl ether (PMVE), perfluoro-ethyl vinyl ether (PEVE), perfluoro-propyl vinyl ether (PPVE), perfluoromethoxy vinyl ether (MOVE) of general formula CF₂=CFOCF₂OR_{f2}, wherein R_{f2} is a linear or branched C₁-C₆ perfluoroalkyl group, cyclic C₅-C₆ perfluoroalkyl group, a linear or branched C₂-C₆ perfluoroxyalkyl group; preferably, R_{f2} is -CF₂CF₃ (MOVE1), -CF₂CF₂OCF₃ (MOVE2), or -CF₃ (MOVE3).

Advantageously, polymer (P) is in the form of a rubber-like polymer.

The invention will be herein after illustrated in greater detail by means of the Examples contained in the following Experimental Section; the Examples are merely illustrative and are by no means to be interpreted as limiting the scope of the invention.

### Experimental section

### Materials:

Peroxidic perfluoropolyether oil having formula

TO-(CF2CF2O)ₘ(CF2O)ₙ(O)ₙ-T'

wherein T and T' are chain ends selected among -CF3, -CF2COF, -COF, - CF2COOH, -CF₂Cl, -CF2CF2Cl, was obtained by Solvay Specialty Polymers Italy S.p.A..

Tetrafluoroethylene (TFE) and perfluoro(methyl vinyl ether) (PMVE) were obtained by Solvay Specialty Polymers Italy S.p.A..

Perfluorinated solvents Galden^{®} D02 and Galden^{®} HT200 are commercially available by Solvay Specialty Polymers Italy S.p.A..

### Characterization Methods:

### ¹⁹F-NMR spettroscopy:

Varian Mercury 200 MHz spectrometer working for the fluorine nucleus was used to obtain the structure, the number average molecular weight and the composition of the PFPE oils reported in the following examples. The ¹⁹F-NMR spectrum was obtained on pure samples using CFCl₃ as internal reference. Hexafluorobenzene was also used as solvent.

### Determination of the peroxidic content (PO):

Analysis of the peroxide content was carried out by iodometric titration using a Mettler DL40 device equipped with platinum electrode. The sensitivity limit for the PO determination was 0.0002%.

### Determination of the residual acidity:

Acidity content was determined by potentiometric titration with Mettler DL40 device equipped with DG 115-SC type electrode. The titration was made using aqueous solution NaOH 0.01 M as titrating agent. The sensitivity limit for the acidity determination is 0.4 meq/kg.

### Determination of the dynamic viscosity:

The dynamic viscosity was measured with frequency sweep tests, using an MCR502 Anton-Paar rheometer with parallel plate geometry (25mm diameter).

### Differential scanning calorimeter (DSC):

The thermal transitions were determined with the PerkinElmer's Pyris instrument.

### Thermogravimetric analysis (TGA):

TGA was performed with a TGA 5500 analyzer from TA Instruments with heating rate of 10°C/min in N2 atmosphere.

### Example 1 - Preparation of polymer PFPE-TFE-PMVE (Polymer 1)

Polymer 1 was prepared using a 1000 mL cylindrical photochemical reactor equipped with a high pressure mercury lamp (HANAU TQ150), magnetic stirring, thermocouple and condenser.

The peroxidic perfluoropolyether used had number average molecular weight of 26700 g/mol; P.O.=1.51%; m/n=1.0; the chain ends T and T' were -CF₃ (90%), -CF₂COF (5%), -COF(2%), -CF₂Cl (2%), -CF₂CF₂Cl (1%).

The reactor was charged with 150.6 g of peroxidic perfluoropolyether having the chemical formula above reported and 1555 g of Galden^{®} D02. They were well mixed to have a clear homogenous solution. The reactor was kept at 20°C in a nitrogen atmosphere during the synthesis. The UV lamp was switched on, while 89 g of PMVE and 53 g of TFE was fed mixed together into the reaction mixture, in a constant flow for 6 hours.

After this reaction time the lamp was switched off, the olefins flow was interrupted and the reaction mixture was flushed with nitrogen. The mixture was transferred into a second glass photochemical reactor and treated with UV light and 1 NL/h of fluorine gas at 60°C for 7 hours. The reactor content was transferred in a round bottom flask equipped with magnetic stirrer to remove solvent and residual P.O. (from 150°C to 230°C).

195.7 g of a rubber-like polymer were found.

Acidity and PO were below the sensitivity limit of the analytical methods.

The polymer obtained had the following structure: TO-(CF₂O)_{g1}(CF₂CF₂O)_{g2}(CF₂CF₂CF₂O)_{g3}(CF₂CF₂CF₂CF₂O)_{g4}(BO)_{g5}-T' where B was a block copolymer that comprise TFE and PMVE units randomly distributed.

The number average molecular weight was 29000 g/mol; the g2/g1 ratio was 0.9, g3 was 1.4 and g4 was 1.0.

The overall weight amount of blocks B in the polymer, calculated by ¹⁹F-NMR analysis, was 34% (24% w/w from TFE and 10% w/w from PMVE). The chain ends T and T' were -CF₃ (97%), -CF₂Cl (2%), -CF₂CF₂Cl (1%).

The DSC analysis indicated the occurrence of a single glass transition at - 103°C.

The TGA analysis found the product to be stable at high temperature (1% loss at 362°C).

### Comparative Example 2 - Preparation of polymer PFPE-PMVE (Polymer 2C)

The synthesis of polymer containing units of PMVE was carried out a 1000 mL cylindrical photochemical reactor equipped with a high pressure mercury lamp (HANAU TQ150), magnetic stirring, thermocouple and condenser.

1260 g of Galden^{®}HT200 were introduced into the reactor with 272 g of a peroxidic perfuoropolyether having the chemical formula above reported and Mn=32900 g/mol, P.O.=1.50%, m/n=1.0. The chain ends T and T' were -CF₃ (55%), -CF₂COF (27%), -COF(10%), -CF₂Cl (5%), -CF₂CF₂Cl (3%).

The reactor was cooled at about 10°C under stirring in nitrogen atmosphere. When the mixture was homogeneous and the temperature was reached, the UV lamp was switched on and PMVE was fed.

The reaction was run for 6 hours, in which 111 g of PMVE were flushed in a constant flow. At the end, the UV lamp was switched off and the feeding of PMVE was interrupted. The reaction mixture was analyzed and a residual PO of 0.16%, referred to the PFPE, was measured. The mixture was transferred into a second glass photochemical reactor and treated with UV light and 1 NL/h of fluorine gas at 60°C for 13 hours. Then, the reaction mixture was transferred in a round bottom flask equipped with magnetic stirrer and it was submitted to vacuum distillation for solvent and residual P.O. removal (from 150°C to 230°C).

262 g of oil were obtained and characterized.

Acidity and PO were below the sensitivity limit of the analytical methods. ¹⁹F-NMR analysis confirms the following structure:

TO-(CF2O)_{g1}(CF2CF2O)_{g2}(CF2CF2CF2O)_{g3}(CF2CF2CF2CF2O)_{g4} (CF2CF(OCF3)O)₉₅-T'

wherein the number average molecular weight was 36000 g/mol, the ratio g2/g1 was 0.9, g3 was 2.0 and g4 was 2.5.

The percentage of -(CF₂CF(OCF₃)O)- unit in the polymer was 12.3%, calculated by ¹⁹F-NMR analysis. T and T' were -CF₃ (92%), -CF₂Cl (5%), - CF₂CF₂Cl (3%).

### Comparative Example 3 - Preparation of polymer PFPE-TFE-PMVE (Polymer 3C)

420g of Galden^{®}HT230 were introduced into the reactor together with 100 g of a peroxidic perfuoropolyether (PFPE) of formula:

TO-(CF₂O)ᵣ(CF₂CF₂O)ₛ(O)ₜ-T'

wherein T and T' were -CF₃ (45%), -CF₂Cl (13%), -CF₂CF₂Cl (7%) and -CF₂COF (35%), having number average molecular weight (Mn) equal to 41500, s/r=1.09 and a PO equal to 1.26%.

The reactor was cooled at about 10°C under stirring in nitrogen atmosphere. As the temperature was reached, the UV lamp was switched on and the fluorinated monomers (PMVE and TFE) were feed by the same inlet (the flow-rate of TFE was 1.8 NI/h and of PMVE was 1.0 NI/h).

The mixture was then maintained in these conditions for 6 hours. Then, the UV lamp was switched off and the feeding of TFE and PMVE was interrupted. The temperature was raised up to RT under nitrogen flow.

The resulting mixture was transferred into a second glass reactor, treated at 230°C for 5 hours and then fluorinated at 180°C with1 NI/h of fluorine gas for a total of 24 hours.

106 g of a viscous oil were recovered after vacuum distillation of the solvent (Galden^{®}HT230).

The product was subjected to acidity and PO measurement, which resulted lower than the sensitivity limit of the methods.

¹⁹F-NMR analysis confirm the following structure

TO-(CF₂O)_{g1}(CF₂CF₂O)_{g2}(CF₂CF₂CF₂O)_{g3}(CF₂CF₂CF₂CF₂O)_{g4}(BO)_{q}-T'

wherein
the ratio g2/g1 was 0.91;
g3 and g4 were 2.4 and 2.3 respectively,
B was -(CF₂CFX)_{y}- wherein X was -F and -OCF₃ and the y average length was 27.0;
q was 5.0;
the percentage of -(BO)_{q}- in the final polymer was 19.2% by weight based on the total weight of the polymer, coming from TFE (10.8% w/w) and PMVE (8.4% w/w);
T and T' were -CF₃ (81%) and the remaining part (19%) was -CF₂Cl and -CF₂CF₂Cl.

The number average molecular weight (Mn) was equal to 42800 g/mol.

## Claims

1. A polymer [polymer (P)] complying with chemical formula (I):
T-O-[A-B]_{z}-[A-B']_{z'}-A-T' (I)
wherein
A is -(X)ₐ-O-(R_{f})-(X')_{b}- in which
(R_{f}) is a fully or partially fluorinated polyoxyalkylene chain,
X and X', equal to or different from each other, are selected from
-CF₂-, -CF₂CF₂- and -CF(CF₃)-;
a and b, equal to or different from each other, are integers equal to 0
or 1
with the proviso that the block A linked to the end group T-O- has a = 1 and the block A linked to the end group T' has b = 0;
z is an integer higher than or equal to 2;
z' is 0 or an integer higher than or equal to 1;
T and T', equal to or different from each other, are hydrogen atom or a group selected from -CF₂H, -CF₂CF₂H, -CF₃, -CF₂CF₃, -CF₂CF₂CF₃, -CF₂Cl, - CF₂CF₂Cl, -C₃F₆Cl, -CF₂Br; and
each of B and B', identical or different from each other, is a recurring unit of formula
-[(CF₂CF₂)_{c}-(CF₂CFR^{X})_{d}]ₑ-
wherein R^{X} is independently selected from:
-CF₃, -OCF₃, -OC₂F₅, and -OC₃F₇ and mixtures thereof; -OCF₂OR_{f2}, wherein R_{f2} is a linear or branched C₁-C₆ perfluoroalkyl group, cyclic C₅-C₆ perfluoroalkyl group, a linear or branched C₂-C₆ perfluoroxyalkyl group; preferably, R_{f2} is-CF₂CF₃, -CF₂CF₂OCF₃, or -CF₃,
c, d and e are independently an integer from 1 to 500;
**characterized in that** :
(1) -(CF₂CF₂)_{c}- and -(CF₂CFR^{X})_{d}- are statistically distributed within B and B'; and
(2a) recurring units of formula -(CF₂CF₂)_{c}- amount to 15 to 28 wt.% of the weight of said polymer (P) and recurring units of formula -(CF₂CFR^{X})_{d}- amount from 4 to 20 wt.%, based on 100 wt.% of said polymer (P) or
(2b) recurring units of formula -(CF₂CF₂)_{c}- amount from 15 to 28 wt.% and in the recurring unit of formula -(CF₂CFR^{X})_{d}-, R^{X} is -CF₃ .

2. The polymer (P) according to Claim 1, said polymer (P) having number average molecular weight in the range from 5000 to 150000 g/mol, more preferably from 10000 to 100000 g/mol, as determined by ¹⁹F-NMR spectroscopy.

3. The polymer (P) according to Claim 1 or 2, wherein in the recurring units of formula -(CF₂CFR^{X})_{d}- ,
R^{X} is independently selected from:
-OCF₃, -OC₂F₅, and -OC₃F₇ and mixtures thereof; -OCF₂OR_{f2}, wherein R_{f2} is a linear or branched C₁-C₆ perfluoroalkyl group, cyclic C₅-C₆ perfluoroalkyl group, a linear or branched C₂-C₆ perfluoroxyalkyl group;
and d is an integer from 1 to 500.

4. The polymer (P) according to Claim 3, wherein recurring units of formula -(CF₂CFR^{X})_{d}- are in an amount of from 6 to 18 wt.%, based on 100 wt.% of said polymer (P).

5. The polymer (P) according to Claim 1 or 2, wherein recurring units of formula -(CF₂CF₂)_{c}- amount from 15 to 28 wt.% and in the recurring unit of formula -(CF₂CFR^{X})_{d}-, R^{X} is -CF₃ and d is an integer from 1 to 500.

6. The polymer (P) according to Claim 1, wherein said chain (R_{f} comprises, preferably consists of, repeating units R°, said repeating units being independently selected from the group consisting of:
(i) -CFXO-, wherein X is F or CF₃;
(ii) -CFXCFXO-, wherein X, equal or different at each occurrence, is F or CF₃, with the proviso that at least one of X is -F;
(iii) -CF₂CF₂CW₂O-, wherein each of W, equal or different from each other, are F, Cl, H;
(iv) -CF₂CF₂CF₂CF₂O-;
(v) -(CF₂)_{w}-CFZ-O- wherein w is an integer from 0 to 3 and Z is a group of general formula -O-R_{(f-a)}-Y, wherein R_{(f-a)} is a fluoropolyoxyalkene chain comprising a number of repeating units from 0 to 10, said recurring units being chosen among the followings : -CFXO- , -CF₂CFXO-, -CF₂CF₂CF₂O-, -CF₂CF₂CF₂CF₂O-, with each of each of X being independently F or CF₃ and Y being a C₁-C₃ perfluoroalkyl group.

7. The polymer (P) according to Claim 6, wherein said chain (R_{f} complies with the following formulae (R_{f}-I) and (R_{f}-II):
(R_{f}-I) -[(CFX¹O)_{g1}(CFX²CFX³O)_{g2}(CF₂CF₂CF₂O)_{g3}(CF₂CF₂CF₂CF₂O)_{g4}]-
wherein
- X¹ is independently selected from -F and -CF₃,
- X², X³, equal or different from each other and at each occurrence, are independently -F, -CF₃, with the proviso that at least one of X is -F;
- g1, g2, g3, and g4, equal or different from each other, are independently ≥0, such that g1+g2+g3+g4 is in the range from 2 to 300, preferably from 10 to 250, even more preferably from 15 to 200; should at least two of g1, g2, g3 and g4 be different from zero, the different recurring units are generally statistically distributed along the chain;
(R_{f}-II) -[(CFX¹O)_{g1}(CFX²CFX³O)_{g2}(CF₂CF₂CF₂O)_{g3}(CF₂CF₂CF₂CF₂O)_{g4}- (CF(CF₃)O)_{g5}(CF₂CF(CF₃)O)_{g6}]-
wherein
- X¹, X², X³ are as defined above;
- g1, g2, g3, g4, g5 and g6, equal or different from each other, are independently ≥0, such that g1+g2+g3+g4+g5+g6 is in the range from 2 to 300, preferably from 10 to 250, with the proviso that at least one of g5 and g6 are different from 0.

8. The polymer (P) according to any one of the preceding Claims, said polymer (P) being in the form of a rubber-like polymer.

9. A method for manufacturing polymer (P) as defined in any one of Claims 1 to 8, said method comprising contacting at least one peroxidic perfluoropolyether polymer, at least tetrafluoroethylene and at least one second co-monomer, under heating or in the presence of UV radiation.

10. The method according to Claim 9, wherein said at least one second co-monomer is selected in the group consisting of : hexafluoropropene (HFP), perfluoro-methyl vinyl ether (PMVE), perfluoro-ethyl vinyl ether (PEVE), perfluoro-propyl vinyl ether (PPVE), perfluoromethoxy vinyl ether (MOVE) of general formula CF₂=CFOCF₂OR_{f2}, wherein R_{f2} is a linear or branched C₁-C₆ perfluoroalkyl group, cyclic C₅-C₆ perfluoroalkyl group, a linear or branched C₂-C₆ perfluoroxyalkyl group; preferably, R_{f2} is -CF₂CF₃ (MOVE1), -CF₂CF₂OCF₃ (MOVE2), or -CF₃ (MOVE3).

## Patentansprüche

1. Ein Polymer [Polymer (P)], das der chemischen Formel (I) entspricht:
T-O-[A-B]_{z}-[A-B']_{z'}-A-T' (I)
wobei
A -(X)ₐ-O-(R_{f})-(X')_{b}- ist, worin
(R_{f}) eine vollständig oder teilweise fluorierte Polyoxyalkylenkette ist,
X und X', gleich oder voneinander verschieden, ausgewählt sind aus -CF₂-, -CF₂CF₂- und -CF(CF₃)-;
a und b, gleich oder voneinander verschieden, ganze Zahlen gleich 0
oder 1 sind
mit der Maßgabe, dass der an die Endgruppe T-O- gebundene Block A a = 1 aufweist und der an die Endgruppe T' gebundene Block A b = 0 aufweist;
z eine ganze Zahl größer als oder gleich 2 ist;
z' 0 oder eine ganze Zahl größer als oder gleich 1 ist;
T und T', gleich oder voneinander verschieden, ein Wasserstoffatom oder eine Gruppe sind, ausgewählt aus -CF₂H, -CF₂CF₂H, -CF₃, -CF₂CF₃, -CF₂CF₂CF₃, -CF₂Cl, - CF₂CF₂Cl, -C₃F₆Cl, -CF₂Br; und
jeder von B und B', identisch oder voneinander verschieden, eine Wiederholungseinheit der Formel
-[(CF₂CF₂)_{c}-(CF₂CFR^{X})_{d}]ₑ-
ist, wobei R^{X} unabhängig ausgewählt ist aus:
-CF₃, -OCF₃, -OC₂F₅, und -OC₃F₇ und Mischungen davon; -OCF₂OR_{f2}, wobei R_{f2} eine lineare oder verzweigte C₁-C₆-Perfluoralkylgruppe, cyclische C₅-C₆-Perfluoralkylgruppe, eine lineare oder verzweigte C₂-C₆-Perfluoroxyalkylgruppe ist; vorzugsweise ist R_{f2}-CF₂CF₃, -CF₂CF₂OCF₃, oder -CF₃,
c, d und e unabhängig eine ganze Zahl von 1 bis 500 sind;
**dadurch gekennzeichnet, dass**:
(1) -(CF₂CF₂)_{c}- und -(CF₂CFR^{X})_{d}- statistisch innerhalb von B und B' verteilt sind;
und
(2a) Wiederholungseinheiten der Formel -(CF₂CF₂)_{c}- 15 bis 28 Gew.-% des Gewichts des genannten Polymers (P) ausmachen und Wiederholungseinheiten der Formel - (CF₂CFR^{X})_{d}-
4 bis 20 Gew.-%, bezogen auf 100 Gew.-% des genannten Polymers (P), ausmachen oder
(2b) Wiederholungseinheiten der Formel -(CF₂CF₂)_{c}- 15 bis 28 Gew.-% ausmachen und in der Wiederholungseinheit der Formel -(CF₂CFR^{X})_{d}-, R^{X} -CF₃ ist.

2. Das Polymer (P) gemäß Ansprüche 1, wobei das genannte Polymer (P) ein zahlenmittleres
Molekulargewicht im Bereich von 5000 bis 150000 g/mol, stärker
bevorzugt von 10000 bis 100000 g/mol, wie durch ¹⁹F-NMR-
Spektroskopie bestimmt, aufweist.

3. Das Polymer (P) gemäß Ansprüche 1 oder 2, wobei in den Wiederholungseinheiten der Formel -(CF₂CFR^{X})_{d}-,
R^{X} unabhängig ausgewählt ist aus:
-OCF₃, -OC₂F₅, und -OC₃F₇ und Mischungen davon; -OCF₂OR_{f2}, wobei R_{f2} eine lineare oder verzweigte C₁-C₆-Perfluoralkylgruppe, cyclische C₅-C₆-Perfluoralkylgruppe, eine lineare oder verzweigte C₂-C₆-Perfluoroxyalkylgruppe ist;
und d eine ganze Zahl von 1 bis 500 ist.

4. Das Polymer (P) gemäß Ansprüche 3, wobei Wiederholungseinheiten der Formel -(CF₂CFR^{X})_{d}- in einer Menge von 6 bis 18 Gew.-%, bezogen auf 100 Gew.-% des genannten Polymers (P), vorliegen.

5. Das Polymer (P) gemäß Ansprüche 1 oder 2, wobei Wiederholungseinheiten der Formel -(CF₂CF₂)_{c}- 15 bis 28 Gew.-% ausmachen und in der Wiederholungseinheit der Formel -(CF₂CFR^{X})_{d}-, R^{X} -CF₃ ist und d eine ganze Zahl von 1 bis 500 ist.

6. Das Polymer (P) gemäß Ansprüche 1, wobei die genannte Kette (R_{f}) umfasst,
vorzugsweise aus Wiederholungseinheiten R° besteht, wobei die genannten Wiederholungseinheiten
unabhängig ausgewählt sind aus der Gruppe bestehend aus:
(i) -CFXO-, wobei X F oder CF₃ ist;
(ii) -CFXCFXO-, wobei X, bei jedem Auftreten gleich oder verschieden, F oder CF₃ ist, mit der Maßgabe, dass mindestens eines von X -F ist;
(iii) -CF₂CF₂CW₂O-, wobei jedes W, gleich oder voneinander verschieden,
F, Cl, H ist;
(iv) -CF₂CF₂CF₂CF₂O-;
(v) -(CF₂)_{w}-CFZ-O- wobei w eine ganze Zahl von 0 bis 3 ist und Z eine Gruppe der allgemeinen Formel -O-R_{(f-a)}-Y ist, wobei R_{(f-a)} eine Fluorpolyoxyalkylenkette ist, die eine Anzahl von Wiederholungseinheiten von 0 bis 10 umfasst, wobei die genannten Wiederholungseinheiten
aus den folgenden ausgewählt sind: -CFXO- , -CF₂CFXO-, -CF₂CF₂CF₂O-, -CF₂CF₂CF₂CF₂O-, wobei jedes von jedem X unabhängig F oder CF₃
ist und Y eine C₁-C₃-Perfluoralkylgruppe ist.

7. Das Polymer (P) gemäß Ansprüche 6, wobei die genannte Kette (R_{f}) den folgenden Formeln (R_{f}-I) und (R_{f}-II) entspricht:
(R_{f}-I) -[(CFX¹O)_{g1}(CFX²CFX³O)_{g2}(CF₂CF₂CF₂O)_{g3}(CF₂CF₂CF₂CF₂O)_{g4}]-
wobei
- X¹ unabhängig aus -F und -CF₃ ausgewählt ist,
- X², X³, gleich oder voneinander verschieden und bei jedem Auftreten, unabhängig -F, -CF₃ sind, mit der Maßgabe, dass mindestens eines von X -F ist;
- g1, g2, g3 und g4, gleich oder voneinander verschieden, unabhängig ≥0 sind, derart, dass g1+g2+g3+g4 im Bereich von 2 bis 300 liegt, vorzugsweise von 10 bis 250, noch stärker bevorzugt von 15 bis 200; sollten mindestens zwei von g1, g2, g3 und g4 von null verschieden sein, sind die unterschiedlichen Wiederholungseinheiten allgemein statistisch entlang der Kette verteilt;
(R_{f}-II) -[(CFX¹O)_{g1}(CFX²CFX³O)_{g2}(CF₂CF₂CF₂O)_{g3}(CF₂CF₂CF₂CF₂O)_{g4}- (CF(CF₃)O)_{g5}(CF₂CF(CF₃)O)_{g6}]-
wobei
- X¹, X², X³ wie oben definiert sind;
- g1, g2, g3, g4, g5 und g6, gleich oder voneinander verschieden,
unabhängig ≥0 sind, derart, dass g1+g2+g3+g4+g5+g6 im Bereich von 2 bis 300 liegt, vorzugsweise von 10 bis 250, mit der Maßgabe, dass mindestens eines von g5 und g6 von 0 verschieden ist.

8. Das Polymer (P) gemäß einem der vorstehenden Ansprüche, wobei das genannte Polymer (P) in der Form eines kautschuk-artigen Polymers vorliegt.

9. Ein Verfahren zur Herstellung von Polymer (P), wie in einem der Ansprüche 1 bis 8 definiert, wobei das genannte Verfahren das Inkontaktbringen von mindestens einem peroxidischen
Perfluorpolyetherpolymer, mindestens Tetrafluorethylen und mindestens einem zweiten Co-Monomer unter Erhitzen oder in Gegenwart von UV-Strahlung umfasst.

10. Das Verfahren gemäß Ansprüche 9, wobei das genannte mindestens eine zweite Co-Monomer aus der Gruppe bestehend aus: Hexafluorpropen (HFP), Perfluoro-methylvinylether (PMVE), Perfluoro-ethylvinylether (PEVE), Perfluoro-propylvinylether (PPVE), Perfluormethoxyvinylether (MOVE) der allgemeinen Formel CF₂=CFOCF₂OR_{f2}, wobei R_{f2} eine lineare oder verzweigte C₁-C₆-Perfluoralkylgruppe, cyclische C₅-C₆-Perfluoralkylgruppe, eine lineare oder verzweigte C₂-C₆-Perfluoroxyalkylgruppe ist; vorzugsweise ist R_{f2} -CF₂CF₃ (MOVE1), -CF₂CF₂OCF₃ (MOVE2), oder -CF₃ (MOVE3).

## Revendications

1. Un polymère [polymère (P)] répondant à la formule chimique (I):
T-O-[A-B]z-[A-B']z'-A-T' (I)
dans laquelle
A est -(X)a-O-(Rf)-(X')b- dans laquelle
(Rf) est une chaîne polyoxyalkylène totalement ou partiellement fluorée,
X et X', identiques ou différents l'un de l'autre, sont choisis parmi -CF₂-, -CF₂CF₂- et -CF(CF₃)-;
a et b, identiques ou différents l'un de l'autre, sont des nombres entiers égaux à 0 ou 1 à condition que le bloc A lié au groupe terminal T-O- ait a = 1 et que le bloc A lié au groupe terminal T' ait b = 0;
z est un nombre entier supérieur ou égal à 2;
z' est 0 ou un nombre entier supérieur ou égal à 1;
T et T', identiques ou différents l'un de l'autre, sont un atome d'hydrogène ou un groupe choisi parmi -CF₂H, -CF₂CF₂H, -CF₃, -CF₂CF₃, -CF₂CF₂CF₃, -CF₂Cl, -CF₂CF₂Cl, -C₃F₆Cl, -CF₂Br; et
chacun de B et B', identiques ou différents l'un de l'autre, est un motif récurrent de formule -[(CF₂CF₂)c-(CF₂CFR^{X})d]e-
dans laquelle R^{X} est choisi indépendamment parmi:
-CF₃, -OCF₃, -OC₂F₅, et -OC₃F₇ et leurs mélanges; -OCF₂ORf₂, dans laquelle Rf₂ est un groupe perfluoroalkyle en C₁-C₆ linéaire ou ramifié, un groupe perfluoroalkyle cyclique en C₅-C₆, un groupe perfluorooxyalkyle en C₂-C₆ linéaire ou ramifié; de préférence, Rf₂ est --CF₂CF₃, - CF₂CF₂OCF₃, ou -CF₃,
c, d et e sont indépendamment un nombre entier de 1 à 500;
**caractérisé en ce que** :
(1) -(CF₂CF₂)c- et -(CF₂CFR^{X})d- sont statistiquement distribués au sein de B et B'; et
(2a) les motifs récurrents de formule -(CF₂CF₂)_{c}- représentent de 15 à 28 % en poids du poids dudit polymère (P) et les motifs récurrents de formule -(CF₂CFR^{X})d- représentent de 4 à 20 % en poids, sur la base de 100 % en poids dudit polymère (P), ou
(2b) les motifs récurrents de formule -(CF₂CF₂)c- représentent de 15 à 28 % en poids et, dans le motif récurrent de formule -(CF₂CFR^{X})d-, R^{X} est -CF₃ .

2. Le polymère (P) selon la revendication 1, ledit polymère (P) ayant une masse moléculaire moyenne en nombre comprise entre 5000 et 150000 g/mol, plus préférablement entre 10000 et 100000 g/mol, telle que déterminée par spectroscopie RMN-¹⁹F.

3. Le polymère (P) selon la revendication 1 ou 2, dans lequel, dans les motifs récurrents de formule -(CF₂CFR^{X})d-,
R^{X} est choisi indépendamment parmi:
-OCF₃, -OC₂F₅, et -OC₃F₇ et leurs mélanges; -OCF₂ORf₂, dans laquelle Rf₂ est un groupe perfluoroalkyle en C₁-C₆ linéaire ou ramifié, un groupe perfluoroalkyle cyclique en C₅-C₆, un groupe perfluorooxyalkyle en C₂-C₆ linéaire ou ramifié; et d est un nombre entier de 1 à 500.

4. Le polymère (P) selon la revendication 3, dans lequel les motifs récurrents de formule -(CF₂CFR^{X})d- sont présents en une quantité de 6 à 18 % en poids, sur la base de 100 % en poids dudit polymère (P).

5. Le polymère (P) selon la revendication 1 ou 2, dans lequel les motifs récurrents de formule -(CF₂CF₂)c- représentent de 15 à 28 % en poids et, dans le motif récurrent de formule -(CF₂CFR^{X})d-, R^{X} est -CF₃ et d est un nombre entier de 1 à 500.

6. Le polymère (P) selon la revendication 1, dans lequel ladite chaîne (Rf) comprend, de préférence consiste en, des motifs répétitifs R°, lesdits motifs répétitifs étant choisis indépendamment dans le groupe constitué de:
(i) -CFXO-, dans lequel X est F ou CF₃;
(ii) -CFXCFXO-, dans lequel X, identique ou différent à chaque occurrence, est F ou CF₃, à condition qu'au moins un X soit -F;
(iii) -CF₂CF₂CW₂O-, dans lequel chacun des W, identiques ou différents l'un de l'autre, est F, Cl, H;
(iv) -CF₂CF₂CF₂CF₂O-;
(v) -(CF₂)w-CFZ-O- dans lequel w est un nombre entier de 0 à 3 et Z est un groupe de formule générale -O-Rf(f-a)-Y, dans laquelle Rf(f-a) est une chaîne fluoropolyoxyalkylène comprenant un nombre de motifs répétitifs de 0 à 10, lesdits motifs récurrents étant choisis parmi les suivants : -CFXO- , -CF₂CFXO-, -CF₂CF₂CF₂O- , -CF₂CF₂CF₂CF₂O-, chacun des X étant indépendamment F ou CF₃ et Y étant un groupe perfluoroalkyle en C₁-C₃.

7. Le polymère (P) selon la revendication 6, dans lequel ladite chaîne (Rf) répond aux formules suivantes (Rf-I) et (Rf-II):
(Rf-I) -[(CFX¹O)g₁(CFX²CFX³O)g₂(CF₂CF₂CF₂O)g₃(CF₂CF₂CF₂CF₂O)g₄]-
dans laquelle
- X¹ est choisi indépendamment parmi -F et -CF₃,
- X², X³, identiques ou différents l'un de l'autre et à chaque occurrence, sont indépendamment - F, -CF₃, à condition qu'au moins un X soit -F;
- g1, g2, g3, et g4, identiques ou différents l'un de l'autre, sont indépendamment ≥0, de sorte que g1+g2+g3+g4 est compris entre 2 et 300, de préférence entre 10 et 250, encore plus préférablement entre 15 et 200; si au moins deux parmi g1, g2, g3 et g4 sont différents de zéro, les différents motifs récurrents sont généralement statistiquement distribués le long de la chaîne;
(Rf-II) -[(CFX¹O)g₁(CFX²CFX³O)g₂(CF₂CF₂CF₂O)g₃(CF₂CF₂CF₂CF₂O)g₄- (CF(CF₃)O)g₅(CF₂CF(CF₃)O)g₆]-
dans laquelle
- X¹, X², X³ sont tels que définis ci-dessus;
- g1, g2, g3, g4, g5 et g6, identiques ou différents l'un de l'autre, sont indépendamment ≥0, de sorte que g1+g2+g3+g4+g5+g6 est compris entre 2 et 300, de préférence entre 10 et 250, à condition qu'au moins l'un de g5 et g6 soit différent de 0.

8. Le polymère (P) selon l'une quelconque des revendications précédentes, ledit polymère (P) étant sous la forme d'un polymère de type caoutchouc.

9. Un procédé de fabrication du polymère (P) tel que défini dans l'une quelconque des revendications 1 à 8, ledit procédé comprenant la mise en contact d'au moins un polymère perfluoropolyéther peroxydique, d'au moins du tétrafluoroéthylène et d'au moins un second comonomère, sous chauffage ou en présence d'un rayonnement UV.

10. Le procédé selon la revendication 9, dans lequel ledit au moins un second comonomère est choisi dans le groupe constitué de : hexafluoropropène (HFP), éther vinylique de perfluorométhyle (PMVE), éther vinylique de perfluoroéthyle (PEVE), éther vinylique de perfluoropropyle (PPVE), éther vinylique de perfluorométhoxy (MOVE) de formule générale CF₂=CFOCF₂OR_{f2}, dans laquelle Rf₂ est un groupe perfluoroalkyle en C₁-C₆ linéaire ou ramifié, un groupe perfluoroalkyle cyclique en C₅-C₆, un groupe perfluorooxyalkyle en C₂-C₆ linéaire ou ramifié; de préférence, Rf₂ est -CF₂CF₃ (MOVE1), -CF₂CF₂OCF₃ (MOVE2), ou -CF₃ (MOVE3).
